# EUROPÄISCHE PATENTSCHRIFT

(11) **EP 2 110 565 B1**
(45) Veröffentlichungstag und Bekanntmachung des Hinweises auf die Patenterteilung: **13.02.2013**
(21) Anmeldenummer: 08021652.6
(22) Anmeldetag: 12.12.2008
(51) Int. Cl.: F16B 19/10, F16B 21/07

(54) **Verbindungsbaugruppe zur Befestigung eines Anbauelements auf einem Trägerelement**
Connection component for attaching an extension element to a carrier element
Composant de raccordement destiné à la fixation d'un élément de construction sur un élément de support

(30) Priorität: 18.04.2008 DE 202008005413 U; 31.07.2008 DE 202008010262 U
(43) Veröffentlichungstag der Anmeldung: 21.10.2009
(73) Patentinhaber: TRW Automotive Electronics & Components GmbH, 78315 Radolfzell (DE)
(72) Erfinder: Loewe, Hubert, 66919 Weselberg (DE); Hofmann, Jürgen, 67304 Eisenberg (DE)
(74) Vertreter: Prinz & Partner

(56) Entgegenhaltungen:
- EP-A1- 0 743 461
- WO-A1-2009/141138
- WO-A2-2011/042159
- DE-A1- 4 404 746
- GB-A- 2 051 288
- GB-A- 2 211 261

## Beschreibung

Die Erfindung betrifft eine Verbindungsbaugruppe zur Befestigung eines Anbauelements auf einem Trägerelement gemäß dem Oberbegriff des Anspruchs 1.

Solche Verbindungsbaugruppen werden insbesondere in der Automobilindustrie zur Befestigung von Innenverkleidungsteilen an Karosserieteilen eines Kraftfahrzeugs eingesetzt.

Es sind verschiedene Arten von Vorrichtungen zum Befestigen von Anbauelementen auf Trägerelementen bekannt, die als Verbindungsbaugruppen mit zwei Verbindungsbauteilen analog zu Nieten ausgebildet sind. Ein erstes Verbindungsteil (Fuß) wird in eine im Trägerelement ausgebildete Öffnung eingeführt. Ein zweites Verbindungsteil (Pin) weist einen Schaft auf, an dessen einem Ende ein Kopf gebildet ist. Mit dem Schaft wird der Pin durch eine Bohrung oder ein Schlitzloch des Anbauelements hindurch und anschließend koaxial in den Fuß eingeschoben. Das Anbauelement ist dann zwischen dem Kopf des Pins und dem Trägerelement eingespannt, wobei das Zusammenwirken zwischen dem Fuß und dem Pin in vielfältiger Weise erfolgen kann.

Häufig muß ein Anbauelement nach seinem ersten Einbau wieder ausgebaut werden, insbesondere um bestimmte Einrichtungen anzubringen oder Wartungsarbeiten durchzuführen. Bei bekannten Verbindungsbaugruppen ist es dann notwendig, zunächst den Pin und anschließend den Fuß zu entfernen, sofern dies noch möglich ist. Die Verbindungsteile müssen also voneinander getrennt werden, wobei nicht selten beim Ausbau eines der Verbindungsteile beschädigt wird. Bestimmte Verbindungstechniken erlauben zudem keine Wiederverwendung der Verbindungsbaugruppe unter zufriedenstellenden Umständen, insbesondere wenn das Zusammenwirken zwischen den Verbindungsteilen unter plastischer Verformung stattfindet.

Aus der EP 1 698 785 A1 ist eine Verbindungsbaugruppe der eingangs genannten Art mit einem Pin und einem Fuß bekannt. Der Pin weist einen Schaft auf, der in eine Öffnung des Fußes einführbar ist. Der Fuß weist zwei elastische Laschen mit Arretiermitteln auf, die sich senkrecht von einer Platte erstrecken. Die Verbindungsbaugruppe kann eine Wartestellung, in welcher der Pin im Fuß gehalten und die Platte des Fußes zwischen einer Anschlagfläche und einem Vorsprung des Pins verspannt ist, eine Verriegelungsstellung und eine Entriegelungsstellung einnehmen.

Die DE 37 04 696 A1 zeigt eine Befestigungsvorrichtung für Platten mit einem Steckteil und einem Aufnahmeteil, in dem eine Ausnehmung für den langgestreckten Körper des Steckteils vorgesehen ist. In der Ausnehmung ist ein umlaufender Halteabschnitt gebildet, der an einem Haltekopf des Steckteils angreift und dadurch das Steckteil gegen ein axiales Herausziehen sichert.

In der U.S. 4,276,806 ist eine wiederverwendbare Befestigungsbaugruppe aus zwei Kunststoffteilen gezeigt, welche zunächst an einer Sollbruchstelle unverlierbar miteinander verbunden sind. Wenn das obere Teil in das untere Teil eingesteckt wird, sorgt es für eine Arretierung des unteren Teils in einer Öffnung des zu befestigenden Elements. Rückhaltemittel des unteren Teils hintergreifen den Rand einer Öffnung des Trägers, so daß das Element fest am Träger befestigt ist. Durch Anheben des Kopfes des oberen Teils kann dieser außer Eingriff mit dem unteren Teil gebracht werden. Das Element mit der Baugruppe kann dann vom Träger getrennt werden.

Aus der EP 1 177 387 B1 ist ein aus einem Oberteil und einem dieses durchsetzenden Unterteil bestehendes Verbindungselement bekannt, mit dem eine Verbindung zwischen einem Träger und einem Lagerteil hergestellt werden kann. In der Montagestellung ist ein Bereich des mit dem Lagerteil verbundenen Oberteils hinter oder in einer Trägeröffnung gespreizt. Das Oberteil weist einen oberen Flansch mit einer zentrischen Innenverzahnung auf, in die eine Gegenverzahnung des Unterteils eingreift. Das Unterteil weist in einem Rastbereich zwischen zwei zylindrischen Sektoren eine Rastausnehmung auf, in die eine Gegenrastdes Oberteils eingelagert ist. Ein mit Schlitzen versehener Schaft, dessen flexible Sektoren mit einer Außenverzahnung versehen sind, schließt an den oberen Flansch des Oberteils an.

Die DE 603 01 994 T2 betrifft ein Kunststoff-Befestigungselement zur Befestigung einer Platte an einem Träger. Das Befestigungselement umfaßt einen Stiftteil mit einem Kopf und einem Schaft sowie einen Körperteil mit einem Flansch und einem sich von diesem erstreckenden Paar von Beinen, die in eine im Träger ausgebildete Bohrung eingesetzt werden können. Der Flansch weist einen Kanal auf, der den Schaft des Stiftteils aufnimmt. Dabei werden die Beine voneinander weg in Druckkontakt mit einer Innenfläche der Trägerbohrung gebracht, um so das Befestigungselement und anschließend die Platte am Träger zu befestigen. Ein außen an einem Bein des Körperteils gebildeter Eingriffsteuermechanismus steuert den Druckkontakt zwischen dem Bein und der Innenfläche der Trägerbohrung. Dadurch wird die Kraft zum Einführen des Stiftteils in den Körperteil bestimmt. Der Eingriffssteuermechanismus umfaßt eine im Bein gebildete Bohrung, wodurch die Druckkraft reduziert wird, die erforderlich ist, um den Schaft durch die Bohrung im Körperteil zu treiben.

Aus der GB 2 051 288 A ist eine Verbindungsbaugruppe mit den Merkmalen des Oberbegriffs des Anspruchs 1 bekannt. Die als Niet ausgeführte Baugruppe umfasst einen Pin, der anfangs mit einem Nietkopf verbunden ist. Der Pin kann in eine zylindrische Bohrung eines Fußes hineingedrückt werden. Aus diesem Montagezustand kann der Pin dank einer Gewindestruktur durch Drehen wieder vom Fuß entfernt werden.

Auch die GB 2 211 261 A zeigt eine Verbindungsbaugruppe mit einem Pin, der ein Außengewinde aufweist. Der Pin wird zur Befestigung zweier Platten miteinander fest in die Bohrung eines Fußes eingedrückt, um zunächst einen Vormontagezustand zu erreichen. Ein weiteres festes Eindrücken stellt den Montagezustand her. Zum Trennen der verbundenen Platten wird der Kopf des Pins entgegen der Gewinderichtung gedreht.

In der DE 44 04 746 A1 ist ein Niet aus Kunststoff zur Befestigung eines plattenförmigen Werkstücks an einer Halterung mit einer annähernd ebenen Fläche gezeigt. Der Niet umfasst einen Schaft mit einem hohlen axialen Durchgang, der mindestens zwei achsparallele, zum freien Ende des Schafts hin offene Schlitze aufweist. Die dadurch gebildeten Schaftabschnitte weisen an der Außenseite einen sich schräg nach außen und unten abstehenden rampenartigen Abschnitt auf, und der axiale Durchgang verjüngt sich zum freien Ende hin. Der Niet umfaßt außerdem einen Dom, der in den Durchgang des Schafts eingetrieben wird. Der Dom weist ein Außengewinde auf, das mit Gewindegangabschnitten an der Innenseite des Schafts zusammenwirkt.

Die bekannten Verbindungsbaugruppen halten hohen Abzugskräften nicht uneingeschränkt Stand. Wenn besonders hohe Abzugskräfte gefordert werden, wird daher immer noch auf konventionelle Schraubverbindungen zurückgegriffen, die jedoch mit einer zeitaufwendigen Montage und Demontage verbunden sind.

Aufgabe der Erfindung ist es, die Nachteile des Stands der Technik zu vermeiden und eine kostengünstige Verbindungsbaugruppe vorzuschlagen, die eine sichere, aber reversible Befestigung des Anbauelements auf dem Trägerelement gewährleistet.

Gelöst wird diese Aufgabe durch eine Verbindungsbaugruppe mit den Merkmalen des Anspruchs 1. Vorteilhafte Ausgestaltungen der erfindungsgemäßen Verbindungsbaugruppe ergeben sich aus den Unteransprüchen.

Die erfindungsgemäße Verbindungsbaugruppe zeichnet sich dadurch aus, daß die Verbindung zwischen dem Anbauelement und dem Trägerelement ohne Werkzeug durch einfaches Niederdrücken des zweiten Verbindungsteils gesichert werden kann, während eine Entsicherung durch Drehung des zweiten Verbindungsteils erfolgt, die in der Regel nur mit Hilfe eines Werkzeugs durchführbar ist. Dadurch kann die Verbindung auch hohen Abzugskräften standhalten, die beispielsweise bei einem Seitenaufprall auftreten. Da nur für die Demontage ein Werkzeug erforderlich ist, ist einerseits die Montage vereinfacht und andererseits ist die Verbindung effektiv vor unerwünschtem Abziehen des Anbauelements geschützt.

Die Rampenstruktur sorgt dafür, daß sich bei einer Drehung des zweiten Verbindungsteils relativ zum ersten Verbindungsteil die axiale Lage des zweiten Verbindungsteils relativ zum ersten Verbindungsteil ändert.

Das erste Verbindungsteil ist vorzugsweise ein Metallteil, das im Vergleich zu bekannten Kunststoffspreiznieten viel größeren Kräften standhält.

Gemäß der bevorzugten Ausführungsform der Erfindung nimmt das eine Verbindungsteil relativ zum anderen Verbindungsteil im Vormontagezustand eine andere axiale Position als im Montagezustand ein.

Bevorzugt ist die Rampenstruktur so ausgelegt, daß die Verbindungsbaugruppe durch eine Drehung des zweiten Verbindungsteils um einen vorbestimmten Winkel vom Montagezustand in den Vormontagezustand überführbar ist.

Bei der bevorzugten Ausführungsform der Erfindung beträgt der Winkel 120°.

Gemäß einem vorteilhaften Aspekt der Erfindung werden die beiden Verbindungsteile im Vormontagezustand unverlierbar zusammengehalten, so daß sich logistische Vorteile (Lagerung, Anlieferung, etc.) ergeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen jeweils in perspektivischer Ansicht:
- Figuren 1 und 2 eine erste Ausführungsform einer erfindungsgemäßen Verbindungsbaugruppe im Vormontagezustand;
- Figuren 3 und 4 den Spreizpin der Verbindungsbaugruppe aus Figur 1;
- Figuren 5 und 6 den Fuß der Verbindungsbaugruppe aus Figur 1;
- Figur 7 die Verbindungsbaugruppe aus Figur 1 im Montagezustand mit Anbauelement und Träger;
- Figur 8 die Verbindungsbaugruppe aus Figur 1 mit Anbauelement und Träger während der Demontage;
- Figur 9 die Verbindungsbaugruppe aus Figur 1 mit Anbauelement und Träger im entriegelten Zustand;
- Figur 10 die Verbindungsbaugruppe aus Figur 1 mit Anbauelement und Träger im Montagezustand mit einem alternativen Befestigungsabschnitt des Anbauelements;
- Figur 11 eine zweite Ausführungsform einer erfindungsgemäßen Verbindungsbaugruppe im Vormontagezustand;
- Figur 12 den Spreizpin der Verbindungsbaugruppe aus Figur 11;
- Figur 13 eine vergrößerte Teilansicht des Spreizpins aus Figur 12;
- Figur 14 den Fuß der Verbindungsbaugruppe aus Figur 11;
- Figur 15 die Verbindungsbaugruppe aus Figur 11 im Montagezustand mit Anbauelement und Träger;
- Figur 16 die Verbindungsbaugruppe aus Figur 11 mit Anbauelement und Träger während der Demontage; und
- Figur 17 die Verbindungsbaugruppe aus Figur 11 mit Anbauelement und Träger im entriegelten Zustand.

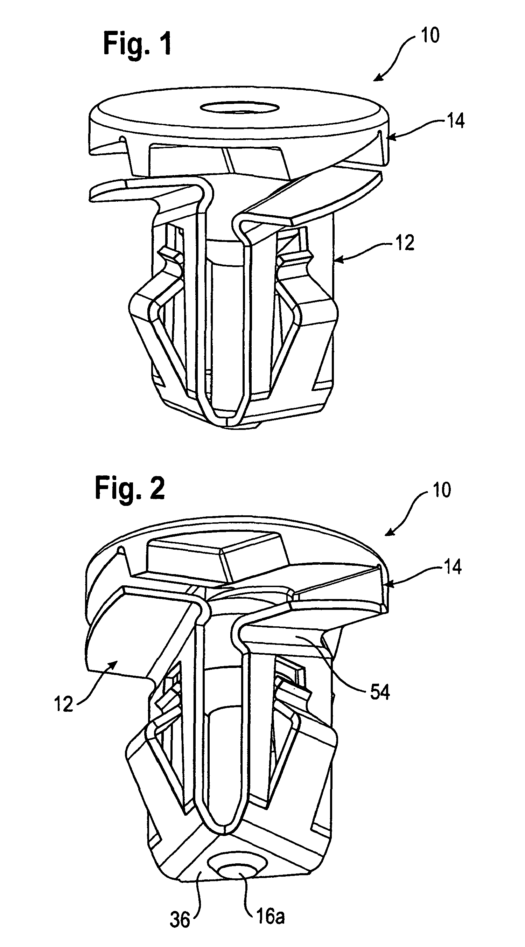

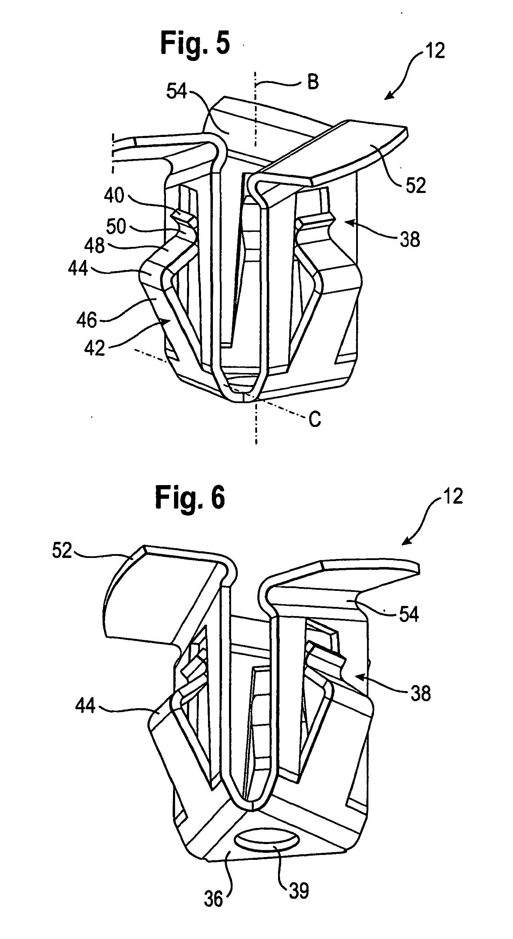

Die in den Figuren 1 und 2 dargestellte Verbindungsbaugruppe 10 gemäß einer ersten Ausführungsform besteht aus einem ersten Verbindungsteil 12 in Form eines klammerartigen Fußes und einem zweiten Verbindungsteil 14 in Form eines Spreizpins, die in den Figuren 5 und 6 bzw. 3 und 4 jeweils einzeln in verschiedenen Ansichten in einem unbelasteten Zustand zu sehen sind. Der Einfachheit halber wird im folgenden das erste Verbindungsteil immer als Fuß 12 und das zweite Verbindungsteil immer als Spreizpin 14 bezeichnet, wobei diese Bezeichnungen nicht einschränkend zu verstehen sind.

Der Spreizpin 14 ist ein einstückig hergestelltes Kunststoffteil, das entlang einer Längsachse A einen Führungsabschnitt 16, einen Mittelabschnitt 18 und einen Kopfabschnitt 20 aufweist. Der längliche Führungsabschnitt 16 und der Mittelabschnitt 18 sind im wesentlichen zylindrisch geformt und über einen kegelstumpfartigen Übergangsabschnitt 22 miteinander verbunden, wobei der Mittelabschnitt 18 einen größeren Außendurchmesser als der Führungsabschnitt 16 hat. Der Kopfabschnitt 20 hat einen noch größeren Außendurchmesser und ist auf der dem Führungsabschnitt 16 zugewandten Seite über einen Schaftabschnitt 24 mit dem Mittelabschnitt 18 verbunden.

Das vom Mittelabschnitt 18 abgewandte Ende 16a des Führungsabschnitts 16 ist verjüngt. Der Mittelabschnitt 18 weist über seinen Umfang verteilt mehrere Rastmulden 26 auf. Im Kopfabschnitt 20 ist eine von der dem Mittelabschnitt 18 abgewandten Seite zugängliche Aufnahme 28 für einen Torx^{®}-Schlüssel oder ein ähnliches Schraubwerkzeug gebildet. Auf der dem Mittelabschnitt 18 zugewandten Seite erstrecken sich vom Schaftbereich 24 mehrere axial geneigte Rampen 30 und genauso viele Anschläge 32 in radialer Richtung nach außen. An den Stellen des Schaftbereichs 24, die nicht von den in Umfangsrichtung verteilt angeordneten Rampen 30 und Anschlägen 32 verdeckt sind, sind Rastflächen 34 vorgesehen.

Der Fuß 12 ist im Gegensatz zum Spreizpin 14 ein Metallteil. Von einem Boden 36 erstrecken sich mehrere Montageabschnitte 38 in einer axialen Richtung, wobei die diesbezügliche Längsachse B durch eine zentrische Führungsbohrung 39 im Boden 36 definiert ist. Die Anzahl der Montageabschnitte 38 entspricht jeweils der Anzahl der Rampen 30, der Anschläge 32 und der Rastmulden 26 des Spreizpins 14 (im dargestellten Ausführungsbeispiel: drei).

Jeder Montageabschnitt 38 weist einen Rahmen 40 und ein Spreizelement 42 mit einem radial nach außen vorstehenden Halteabschnitt 44 auf, der zwischen zwei rampenartigen Abschnitten 46 und 48 gebildet ist. Ferner weist das Spreizelement 42, das an einem Ende mit dem Boden 36 verbunden ist, am entgegengesetzten Ende einen Klemmabschnitt 50 auf. Das Spreizelement 42 ist aufgrund seiner einseitigen Lagerung um eine zur Längsachse B senkrechte Achse C schwenkbar (gegen eine Rückstellkraft). Die Abmessungen des Rahmens 40 und des Spreizelements 42 sind so aufeinander abgestimmt, daß das Spreizelement 42, insbesondere dessen Klemmabschnitt 50, durch den Rahmen 40 hindurch bewegt werden kann.

Des weiteren weist jeder Montageabschnitt 38 eine radial nach außen vorstehende Rampe 52 auf, die über einen Rastabschnitt 54 mit dem dem Boden 36 entgegengesetzten Ende des Rahmens 40 verbunden ist. Die Abmessung und die Neigung der Rampen 52 des Fußes 12 sind auf die Rampen 30 des Spreizpins 14 abgestimmt, so daß die Rampen 52 des Fußes 12 im folgenden als komplementäre Rampen 52 bezeichnet werden.

Die beiden Bestandteile 12, 14 der Verbindungsbaugruppe 10 werden miteinander verbunden, indem der Spreizpin 14 so weit in den Fuß 12 eingeführt wird, bis die Rastabschnitte 54 des Fußes 12 in die Rastmulden 26 des Spreizpins 14 einrasten. Dabei erleichtert die Verjüngung des Führungsschafts 16 an dessen Ende 16a das Einführen in die Bohrung 39 des Fußes 12. Die Rastverbindung sorgt dafür, daß der Spreizpin 14 und der Fuß 12 unverlierbar zusammengehalten werden. Dieser Zustand der Verbindungsbaugruppe 10 wird, wie zuvor bereits erwähnt, als Vormontagezustand bezeichnet (siehe Figuren 1 und 2). Zu beachten ist, daß die Anordnung der Rastmulden 26 und die Anordnung der Rastabschnitte 54 so aufeinander abgestimmt sind, daß bei korrektem Verrasten der Fuß 12 bezüglich der Längsachsen A und B eine vorbestimmte Winkelposition relativ zum Spreizpin 14 einnimmt. In dieser Stellung liegen sich die Rampen 30 des Spreizpins 14 und die komplementären Rampen 52 des Fußes 12 genau gegenüber, während den Anschlägen 32 des Spreizpins 14 kein Teil des Fußes 12 gegenüberliegt.

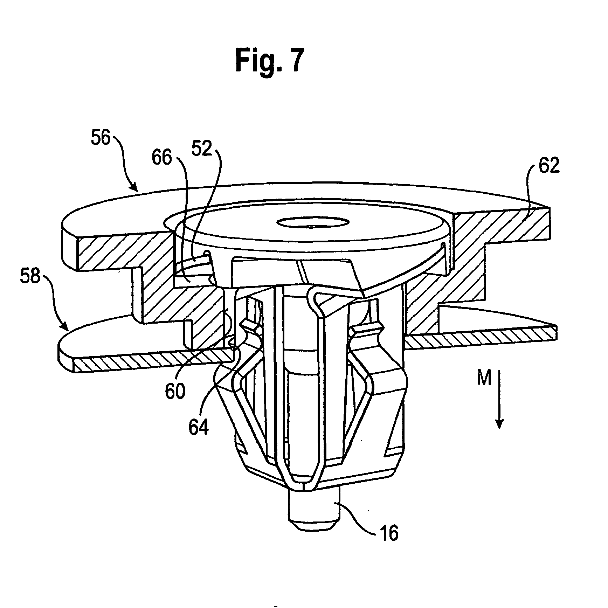

Zur Befestigung eines Anbauelements 56 an einem Trägerelement 58 (vgl. Figur 7) wird die im Vormontagezustand bereitgestellte Verbindungsbaugruppe 10 zunächst durch eine gestufte Bohrung 60 in einem Befestigungsabschnitt 62 des Anbauelements 56 und anschließend durch eine Öffnung 64 im Trägerelement 58 geführt. Da im Vormontagezustand die Klemmabschnitte 50 des Fußes 12 dem Führungsabschnitt 16 des Spreizpins 14 gegenüberliegen, jedoch nicht an diesem anliegen, können die Spreizelemente 42 nach innen schwenken, um das Durchführen durch die Bohrung 60 und die Öffnung 64 zu ermöglichen. Nach dem Durchtritt durch die Öffnung 64 schwenken die Spreizelemente 42 selbsttätig wieder nach außen und hintergreifen den Rand der Öffnung 64, während die dem Boden 36 zugewandten Enden der komplementären Rampen 52 des Fußes 12 auf einer Stufe 66 des Befestigungsabschnitts 62 aufliegen.

Um ein Abziehen des Anbauelements 56 bzw. der Verbindungsbaugruppe 10 vom Trägerelement 58 zu verhindern, muß die Verbindung gesichert werden. Hierzu wird die Verbindungsbaugruppe 10 aus dem Vormontagezustand in den in Figur 7 gezeigten Montagezustand überführt, indem der Spreizpin 14 relativ zum Fuß 12 weiter in Montagerichtung M niedergedrückt wird, bis die Rastabschnitte 54 des Fußes 12 mit den Rastflächen 34 am Schaftabschnitt 24 des Spreizpins 14 in Eingriff kommen, ohne daß dabei der Spreizpin 14 gedreht wird. Dies ist möglich, weil in der im Vormontagezustand vorgegebenen Winkelposition die Rampen 30 des Spreizpins 14 bis auf die komplementären Rampen 52 des Fußes 12 abgesenkt werden können und den Anschlägen 32 des Spreizpins 14 keine Hindernisse gegenüberliegen.

Beim Eindrücken des Spreizpins 14 gleiten die Klemmabschnitte 50 über den Übergangsabschnitt 22 auf den Mittelabschnitt 18 des Spreizpins 14. In dieser Position können die Spreizelemente 42 nicht mehr nach innen schwenken, so daß die nunmehr unbeweglichen Halteabschnitte 44 des Spreizelements 42 das Anbauteil 56 sicher am Trägerelement 58 halten. Von außen ist der Montagezustand dadurch erkennbar, daß der Kopfabschnitt 20 des Spreizpins 14 nicht mehr über den Befestigungsabschnitt 62 des Anbauelements 56 herausragt.

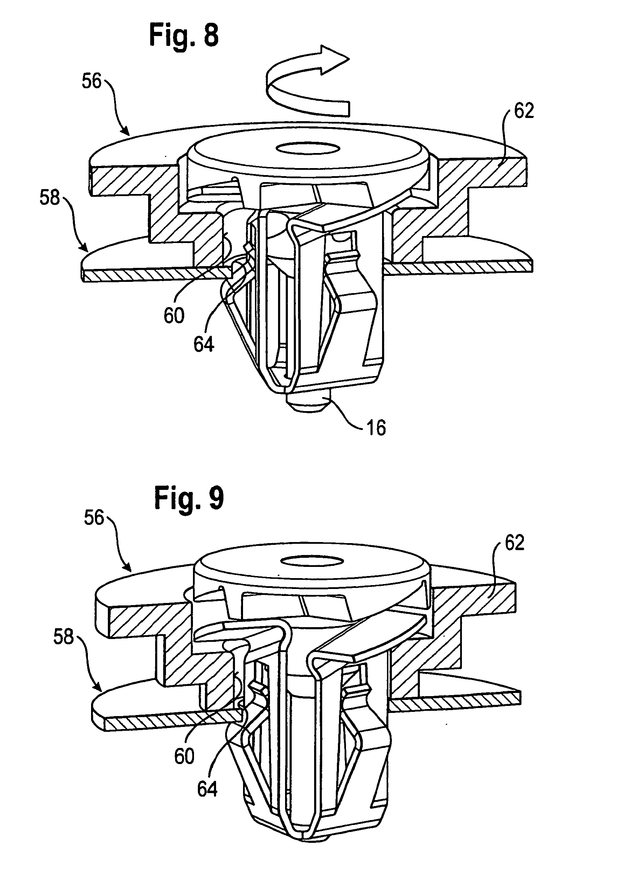

Dennoch ist eine Demontage des Anbauelements 56 möglich. Mit einem passenden Schraubwerkzeug kann der Spreizpin 14 gedreht werden, wie in Figur 8 durch den Pfeil angedeutet. Aufgrund der Rampenstruktur entfernt sich dabei der Spreizpin 14 vom Fuß 12 in axialer Richtung (entgegengesetzt zur Montagerichtung M). Die Formen der Rastmulden 26 und der Rastflächen 34 sind auf die Bewegung des Spreizpins 14 relativ zum Fuß 12, die eine Komponente in Umfangsrichtung und eine axiale Komponente hat, abgestimmt. Nach einer Drehung um einen bestimmten Drehwinkel, der von der Anzahl und Anordnung der Rampen 30, 52 abhängt (im dargestellten Ausführungsbeispiel: 120°), ist die Verbindungsbaugruppe 10 entriegelt und der stabile Vormontagezustand der Verbindungsbaugruppe 10 erreicht (siehe Figur 9). Im Vormontagezustand können die Spreizelemente 42 wieder nach innen schwenken, so daß die Verbindungsbaugruppe 10 und das Anbauelement 56 vom Trägerelement 58 abgezogen werden können.

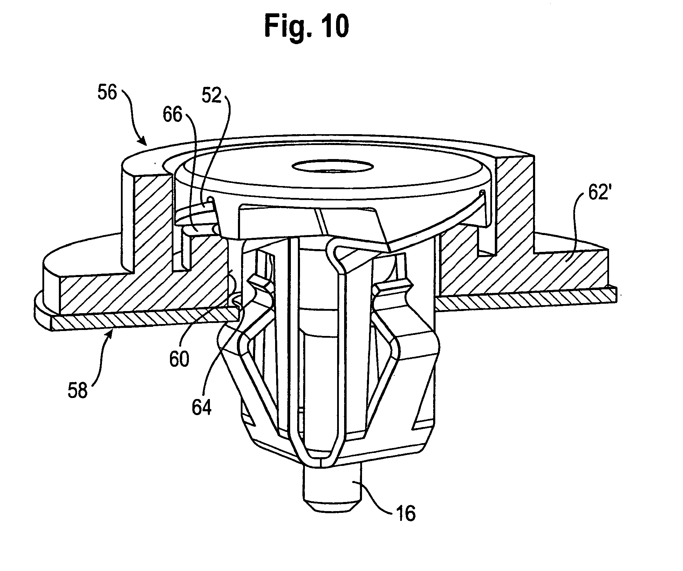

Figur 10 zeigt die gleiche Verbindungsbaugruppe 10 im Montagezustand, wobei der Befestigungsabschnitt 62' des Anbauelements 56 anders ausgebildet ist. Der alternative Befestigungsabschnitt 62' weist jedoch auch eine Bohrung 60 und eine Stufe 66 auf, auf der die Enden der komplementären Rampen 52 des Fußes 12 aufliegen.

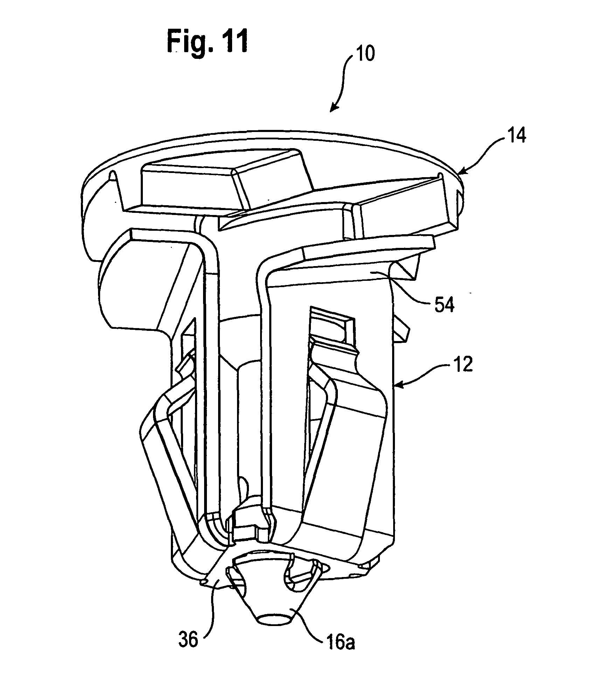

In den Figuren 11 bis 17 ist eine Verbindungsbaugruppe gemäß einer zweiten Ausführungsform dargestellt. Die zweite Ausführungsform ist der zuvor beschriebenen ersten Ausführungsform sehr ähnlich, so daß im folgenden nur auf die Unterschiede eingegangen wird. Für diejenigen Komponenten, die denen der ersten Ausführungsform entsprechen und die gleiche Funktion haben, wurden die gleichen Bezugszeichen verwendet und es wird insoweit auf die obigen Erläuterungen verwiesen.

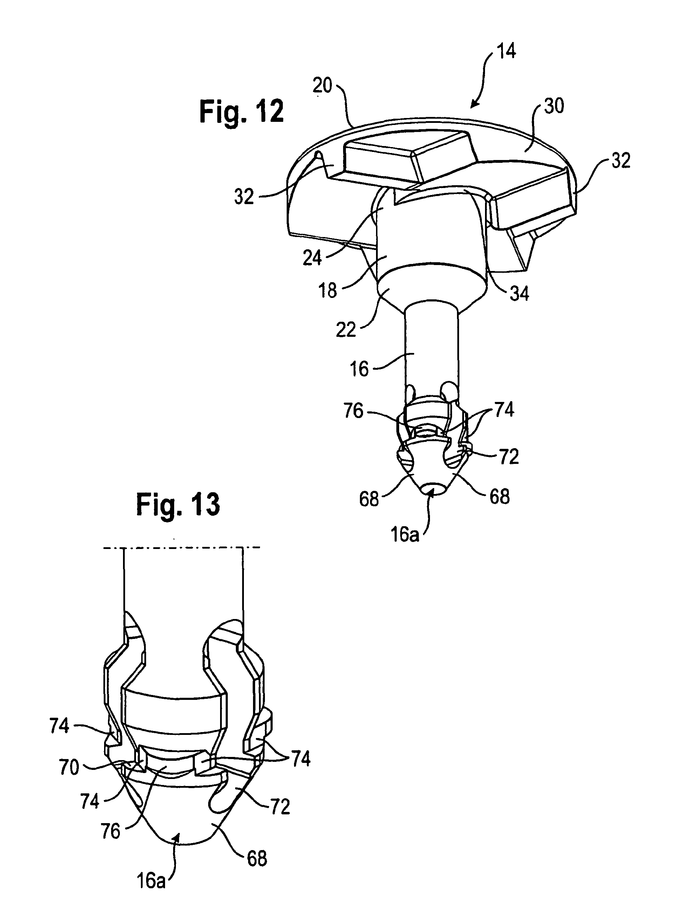

Der Spreizpin 14 der zweiten Ausführungsform unterscheidet sich von dem der ersten Ausführungsform dadurch, daß am Mittelabschnitt 18 keine Rastmulden vorgesehen sind und daß der vom Mittelabschnitt 18 abgewandte Bereich des Führungsabschnitts 16 anders gestaltet ist (siehe Figuren 12 und 13). Wie bei der ersten Ausführungsform ist das Ende 16a des Führungsabschnitts 16 verjüngt; es ist jedoch weitgehend hohl. Mehrere nachgiebige Wandabschnitte 68 mit axialen Anlageflächen 70 sind durch Teilausnehmungen 72 voneinander abgegrenzt. Oberhalb und senkrecht orientiert zu den axialen Anlageflächen 70 sind mehrere seitliche Anlageflächen 74 gebildet, die durch die Teilausnehmungen 72 unterbrochen sind. Zwischen den seitlichen Anlageflächen 74 befinden sich Bereiche 76, die gegenüber dem Rest der Wandabschnitte 68 radial vorstehen.

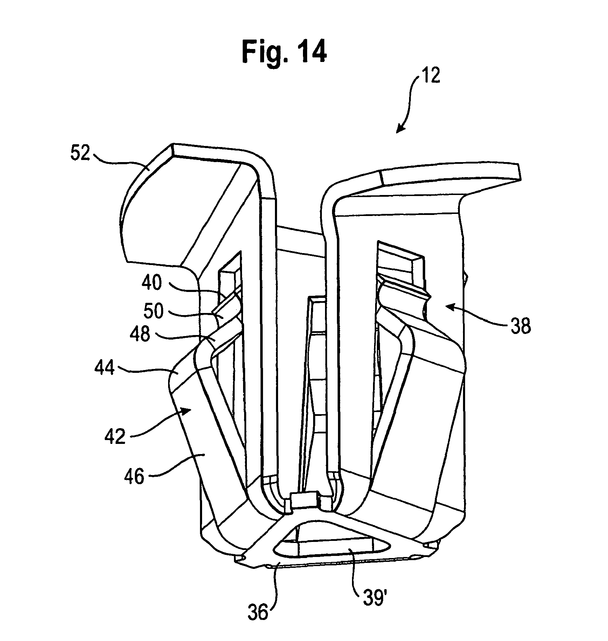

Beim Fuß 12 der zweiten Ausführungsform ist die Bohrung 39' im Boden 36 nicht rund, sondern mehreckig, wobei die "Ecken" abgerundet sein können (siehe Figur 14). Der Rand der Bohrung 39' entspricht genau dem Verlauf der seitlichen Anlageflächen 74 und der vorstehenden Bereiche 76 des Spreizpins 12. Die Montageabschnitte 38 erstrecken sich von den längsseitigen Randabschnitten der Bohrung 39'. Die Anzahl der Montageabschnitte 38 entspricht jeweils der Anzahl der Ecken der Bohrung 39', der Rampen 30, der Anschläge 32 und der Wandabschnitte 68 des Spreizpins 14 (im dargestellten Ausführungsbeispiel: drei).

Um die beiden Bestandteile 12, 14 der Verbindungsbaugruppe 10 in den Vormontagezustand zu bringen, wird der Spreizpin 14 unter elastischer Verformung der Wandabschnitte 68 so weit in den Fuß 12 eingeführt, bis die Wandabschnitte 68 wieder ihre Ausgangslage einnehmen und die axialen Anlageflächen 70 den Rand der Bohrung 39' hintergreifen können und der Rand der Bohrung 39' an den seitlichen Anlageflächen 74 zur Anlage kommt (siehe Figur 11).

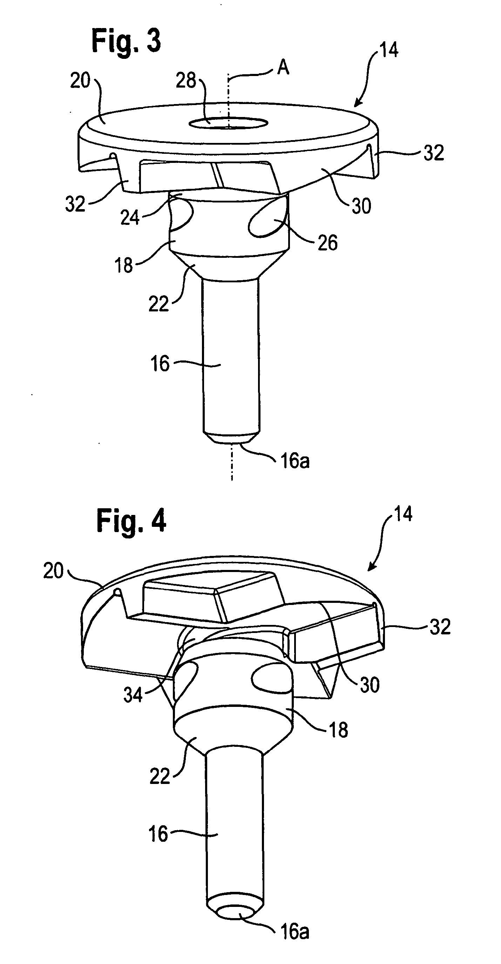

Die so hergestellte Rastverbindung sorgt wie bei der ersten Ausführungsform dafür, daß der Spreizpin 14 und der Fuß 12 unverlierbar zusammengehalten werden. Zu beachten ist wiederum, daß die Gestaltung der seitlichen Anlageflächen 74, der vorstehenden Bereiche 76 und der Bohrung 39 so aufeinander abgestimmt sind, daß bei korrektem Verrasten der Fuß 12 bezüglich der Längsachsen A und B (vgl. Figuren 3 und 5) eine vorbestimmte Winkelposition relativ zum Spreizpin 14 einnimmt. In dieser Stellung liegen sich die Rampen 30 des Spreizpins 14 und die komplementären Rampen 52 des Fußes 12 genau gegenüber, während den Anschlägen 32 des Spreizpins 14 kein Teil des Fußes 12 gegenüberliegt.

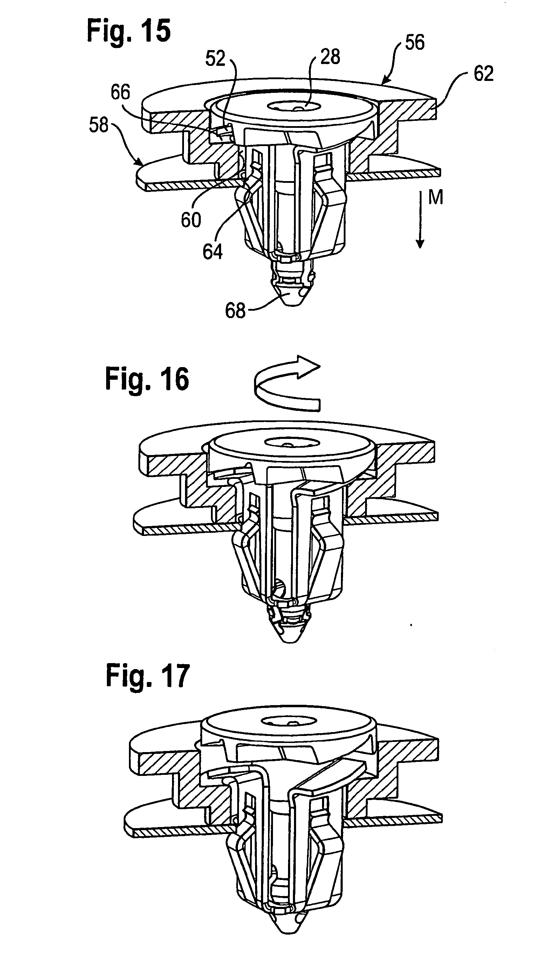

Die Befestigung und Sicherung eines Anbauelements 56 an einem Trägerelement 58 mit Hilfe der Verbindungsbaugruppe erfolgt analog der ersten Ausführungsform durch Niederdrücken des Spreizpins 14 relativ zum Fuß 12 in Montagerichtung M, ohne daß dabei der Spreizpin 14 gedreht wird. Der Montagezustand ist in Figur 15 zu sehen.

Auch die Demontage des Anbauelements 56 erfolgt analog zur ersten Ausführungsform. Bei der Drehung des Spreizpins 14 hebt sich der Spreizpin 14 in axialer Richtung vom Fuß 12 ab (siehe Figur 16). Nach einem bestimmten Drehwinkel, der von der Anzahl und Anordnung der Rampen 30, 52 abhängt (im dargestellten Ausführungsbeispiel: 120°) ist die Verbindungsbaugruppe 10 entriegelt und der stabile Vormontagezustand der Verbindungsbaugruppe 10 erreicht (siehe Figur 17), in dem die Spreizelemente 42 wieder nach innen schwenkbar sind, so daß die Verbindungsbaugruppe 10 und das Anbauelement 56 vom Trägerelement 58 abgezogen werden können.

Bei den in den Figuren gezeigten Ausführungsbeispielen besteht die Verbindungsbaugruppe 10 nur aus dem Spreizpin 14 und dem Fuß 12. Die Verbindungsteile können aber auch anders ausgestaltet sein, soweit sie die gleiche erfindungsgemäße Funktionalität aufweisen. Es sind auch erweiterte Ausführungsformen möglich, die einen oder mehrere Dichtabschnitte oder ein separates Dichtteil zur Abdichtung der Bohrung 60 des Anbauelements 56 und/oder der Öffnung 64 des Trägerelements 58 aufweisen.

Obwohl die Erfindung bevorzugt auf dem Gebiet der Verkleidung von Strukturen und insbesondere auf dem Gebiet der Kraftfahrzeuge und des Verkleidens der Karosserie mit einer Innenverkleidung anwendbar ist, wurde die Erfindung allgemein anhand einer reversiblen Befestigung eines Anbauelements auf einem Trägerelement beschrieben, wobei das Anbauelement ein Innenverkleidungsteil und das Trägerelement ein Karosserieteil eines Kraftfahrzeugs sein können.

## Patentansprüche

1. Verbindungsbaugruppe (10) zur Befestigung eines Anbauelements (56) auf einem Trägerelement (58), mit
einem ersten Verbindungsteil (12), das in eine Öffnung (64) des Trägerelements (58) einführbar ist und Haltemittel zur Festlegung des ersten Verbindungsteils (12) am Trägerelement (58) aufweist, und
einem zweiten Verbindungsteil (14), das in eine Bohrung (60) des Anbauelements (56) einführbar ist,
wobei das zweite Verbindungsteil (14) in das erste Verbindungsteil (12) einführbar ist,
die Verbindungsbaugruppe (10) aus einem Vormontagezustand, in dem die Haltemittel ein Abziehen des ersten Verbindungsteils (12) vom Trägerelement (58) erlauben, in einen Montagezustand überführbar ist, in dem die Haltemittel ein Abziehen des ersten Verbindungsteils (12) vom Trägerelement (58) nicht erlauben,
die Verbindungsbaugruppe (10) aus dem Vormontagezustand durch Niederdrücken des zweiten Verbindungsteils (14) in das erste Verbindungsteil (12) in den Montagezustand und durch Drehung des zweiten Verbindungsteils (14) relativ zum ersten Verbindungsteil (12) aus dem Montagezustand zurück in den Vormontagezustand überführbar ist, und
das zweite Verbindungsteil (14) im Vormontagezustand relativ zum ersten Verbindungsteil (12) eine andere axiale Position als im Montagezustand einnimmt,
**dadurch gekennzeichnet, daß**
das zweite Verbindungsteil (14) mehrere axial geneigte Rampen (30) und das erste Verbindungsteil (12) komplementäre Rampen (52) aufweist, deren Abmessung und Neigung auf die Rampen (30) des zweiten Verbindungsteils (14) abgestimmt sind, wobei die komplemenfären Rampen (52) ein oberes Ende des ersten Verbindungsteils (12) bilden und die Rampen (30) im Montagezustand auf den komplementären Rampen (52) aufliegen, und
die durch die Rampen (30) und die komplementären Rampen (52) gebildete Rampenstruktur bei einer Drehung des zweiten Verbindungsteils (14) relativ zum ersten Verbindungsteil (12) dafür sorgt, daß sich die axiale Lage des zweiten Verbindungsteils (14) relativ zum ersten Verbindungsteil (12) ändert.

2. Verbindungsbaugruppe nach Anspruch 1, **dadurch gekennzeichnet, daß** das erste Verbindungsteil (12) ein Metallteil ist.

3. Verbindungsbaugruppe nach Anspruch 1 oder 2, **dadurch gekennzeichnet, daß** das zweite Verbindungsteil (14) ein Kunststoffteil ist.

4. Verbindungsbaugruppe nach einem der vorhergehenden Ansprüche, **dadurch gekennzeichnet, daß** das zweite Verbindungsteil (14) eine Aufnahme für ein Schraubwerkzeug aufweist, mit dem das zweite Verbindungsteil (14) relativ zum ersten Verbindungsteil (12) verdreht werden kann.

5. Verbindungsbaugruppe nach einem der vorhergehenden Ansprüche, **dadurch gekennzeichnet, daß** die Rampenstruktur so ausgelegt ist, daß die Verbindungsbaugruppe (10) durch eine Drehung des zweiten Verbindungsteils (14) um einen vorbestimmten Winkel vom Montagezustand in den Vormontagezustand überführbar ist.

6. Verbindungsbaugruppe nach Anspruch 5, **dadurch gekennzeichnet, daß** der Winkel 120° beträgt.

7. Verbindungsbaugruppe nach einem der vorhergehenden Ansprüche, **dadurch gekennzeichnet, daß** ein Verbindungsteil (14) ein verjüngtes Ende (16a) aufweist, das in eine Bohrung (39; 39') des anderen Verbindungsteils (12) einführbar ist.

8. Verbindungsbaugruppe nach einem der vorhergehenden Ansprüche, **dadurch gekennzeichnet, daß** im Vormontagezustand die beiden Verbindungsteile (12, 14) unverlierbar zusammengehalten werden.

9. Verbindungsbaugruppe nach einem der vorhergehenden Ansprüche, **dadurch gekennzeichnet, daß** im Vormontagezustand Rastabschnitte (54) des einen Verbindungsteils (12) mit Rastmulden (26) des anderen Verbindungsteils (14) zusammenwirken.

10. Verbindungsbaugruppe nach Anspruch 9, **dadurch gekennzeichnet, daß** die Rastabschnitte (54) und die Rastmulden (26) im Vormontagezustand eine bestimmte Winkelposition der beiden Verbindungsteile (12, 14) relativ zueinander vorgeben, die ein weiteres Einführen des zweiten Verbindungsteils (14) in das erste Verbindungsteil (12) erlaubt.

11. Verbindungsbaugruppe nach einem der Ansprüche 1 bis 8, **dadurch gekennzeichnet, daß** im Vormontagezustand Anlageflächen (70, 74) des einen Verbindungsteils (14) mit dem Rand einer Bohrung (39') des anderen Verbindungsteils (12) zusammenwirken.

12. Verbindungsbaugruppe nach Anspruch 11, **dadurch gekennzeichnet, daß** die Anlageflächen (70, 74) und der Rand der Bohrung (39') im Vormontagezustand eine bestimmte Winkelposition der beiden Verbindungsteile (12, 14) relativ zueinander vorgeben, die ein weiteres Einführen des zweiten Verbindungsteils (14) in das erste Verbindungsteil (12) erlaubt.

13. Verbindungsbaugruppe nach einem der vorhergehenden Ansprüche, **dadurch gekennzeichnet, daß** im Montagezustand Rastabschnitte (54) des einen Verbindungsteils (12) mit Rastflächen (34) des anderen Verbindungsteils (14) zusammenwirken.

14. Verbindungsbaugruppe nach einem der vorhergehenden Ansprüche, **dadurch gekennzeichnet, daß** die Haltemittel wenigstens ein Spreizelement (42) mit einem Halteabschnitt (44) aufweisen, der im Vormontagezustand, nicht jedoch im Montagezustand, radial nach innen schwenkbar ist, um den Durchtritt des ersten Verbindungsteils (12) durch eine Öffnung (64) des Trägerelements (58) zu erlauben.

15. Verbindungsbaugruppe nach Anspruch 14, **dadurch gekennzeichnet, daß** das Spreizelement (42) einen Klemmabschnitt (50) aufweist, der im Montagezustand, nicht jedoch im Vormontagezustand, unter Vorspannung an einem Abschnitt (18) des zweiten Verbindungsteils (14) anliegt.

## Claims

1. A connecting assembly (10) for fastening an add-on element (56) on a carrier element (58), comprising
a first connecting part (12) which can be inserted into an opening (64) of the carrier element (58) and comprises retaining means for fixing the first connecting part (12) to the carrier element (58), and
a second connecting part (14) which can be inserted into a bore (60) of the add-on element (56),
the second connecting part (14) being adapted to be inserted into the first connecting part (12),
the connecting assembly (10) being adapted to be converted from a pre-mounted state, in which the retaining means permit a removal of the first connecting part (12) from the carrier element (58), into a mounted state, in which the retaining means do not permit a removal of the first connecting part (12) from the carrier element (58),
the connecting assembly (10) being adapted to be converted from the pre-mounted state into the mounted state by pressing down the second connecting part (14) into the first connecting part (12), and from the mounted state back into the pre-mounted state by a rotation of the second connecting part (14) relative to the first connecting part (12), and
the second connecting part (14) taking in the pre-mounted state an axial position relative to the first connecting part (12), which is different from that in the mounted state,
**characterized in that**
the second connecting part (14) has several axially inclined ramps (30) and the first connecting part (12) has complementary ramps (52) the size and inclination of which are adapted to the ramps (30) of the second connecting part (14), the complementary ramps (52) forming an upper end of the first connecting part (12), and the ramps (30) resting on the complementary ramps (52) in the mounted state, and
the ramp structure formed by the ramps (30) and the complementary ramps (52) ensuring, during a rotation of the second connecting part (14) relative to the first connecting part (12), that the axial position of the second connecting part (14) relative to the first connecting part (12) changes.

2. The connecting assembly according to claim 1, **characterized in that** the first connecting part (12) is a metallic part.

3. The connecting assembly according to claim 1 or 2, **characterized in that** the second connecting part (14) is a plastic part.

4. The connecting assembly according to any of the preceding claims, **characterized in that** the second connecting part (14) has a reception for a screw tool by means of which the second connecting part (14) can be rotated relative to the first connecting part (12).

5. The connecting assembly according to any of the preceding claims, **characterized in that** the ramp structure is designed such that the connecting assembly (10) can be converted from the mounted state into the pre-mounted state by a rotation of the second connecting part (14) through a predetermined angle.

6. The connecting assembly according to claim 5, **characterized in that** the angle amounts to 120°.

7. The connecting assembly according to any of the preceding claims, **characterized in that** one connecting part (14) has a tapered end (16a) which can be inserted into a bore (39; 39') of the other connecting part (12).

8. The connecting assembly according to any of the preceding claims, **characterized in that** in the pre-mounted state, the two connecting parts (12, 14) are captively held together.

9. The connecting assembly according to any of the preceding claims, **characterized in that** in the pre-mounted state, latching portions (54) of one of the connecting parts (12) cooperate with latching recesses (26) of the other connecting part (14).

10. The connecting assembly according to claim 9, **characterized in that** in the pre-mounted state, the latching portions (54) and the latching recesses (26) dictate a determined angular position of the two connecting parts (12, 14) relative to each other, which permits a further insertion of the second connecting part (14) into the first connecting part (12).

11. The connecting assembly according to any of claims 1 to 8, **characterized in that** in the pre-mounted state, locating faces (70, 74) of one of the connecting parts (14) cooperate with the rim of a bore (39') of the other connecting part (12).

12. The connecting assembly according to claim 11, **characterized in that** in the pre-mounted state, the locating faces (70, 74) and the rim of the bore (39') dictate a determined angular position of the two connecting parts (12, 14) relative to each other, which permits a further insertion of the second connecting part (14) into the first connecting part (12).

13. The connecting assembly according to any of the preceding claims, **characterized in that** in the mounted state, latching portions (54) of one of the connecting parts (12) cooperate with latching faces (34) of the other connecting part (14).

14. The connecting assembly according to any of the preceding claims, **characterized in that** the retaining means include at least one expanding element (42) having a retaining portion (44) which can be pivoted radially inwards in the pre-mounted state, but not in the mounted state, to permit the passage of the first connecting part (12) through an opening (64) of the carrier element (58).

15. The connecting assembly according to claim 14, **characterized in that** the expanding element (42) has a clamping portion (50) which rests against a portion (18) of the second connecting part (14) under prestress in the mounted state, but not in the pre-mounted state.

## Revendications

1. Ensemble de raccordement (10) pour la fixation d'un élément rapporté (56) sur un élément support (58), comportant :
une première pièce de raccordement (12) qui est apte à être insérée dans un orifice (64) de l'élément support (58) et qui présente des moyens de retenue pour le blocage de la première pièce de raccordement (12) sur l'élément support (58), et
une deuxième pièce de raccordement (14) qui est apte à être insérée dans un perçage (60) de l'élément rapporté (56),
la deuxième pièce de raccordement (14) étant apte à être insérée dans la première pièce de raccordement (12),
l'ensemble de raccordement (10) état apte à être amené depuis un état de prémontage, dans lequel les moyens de retenue permettent un retrait de la première pièce de raccordement (12) de l'élément support (58), dans un état de montage, dans lequel les moyens de retenue ne permettent pas de retrait de la première pièce de raccordement (12) de l'élément support (58),
l'ensemble de raccordement (10) étant apte à être amené depuis l'état de prémontage dans l'état de montage en enfonçant la deuxième pièce de raccordement (14) dans la première pièce de raccordement (12), et depuis l'état de montage de nouveau dans l'état de prémontage en tournant la deuxième pièce de raccordement (14) par rapport à la première pièce de raccordement (12), et
la deuxième pièce de raccordement (14) prenant dans l'état de prémontage une autre position axiale par rapport à la première pièce de raccordement (12) que dans l'état de montage,
**caractérisé en ce que**
la deuxième pièce de raccordement (14) présente plusieurs rampes (30) axialement inclinées et la première pièce de raccordement (12) des rampes complémentaires (52), dont la taille et l'inclinaison sont adaptées aux rampes (30) de la deuxième pièce de raccordement (14), les rampes complémentaires (52) formant une extrémité supérieure de la première pièce de raccordement (12), et les rampes (30) reposant sur les rampes complémentaires (52) dans l'état de montage, et
**en ce que** la structure de rampe réalisée par les rampes (30) et les rampes complémentaires (52) assure lors d'une rotation de la deuxième pièce de raccordement (14) par rapport à la première pièce de raccordement (12) que la position axiale de la deuxième pièce de raccordement (14) par rapport à la première pièce de raccordement (12) change.

2. Ensemble de raccordement selon la revendication 1, **caractérisé en ce que** la première pièce de raccordement (12) est une pièce métallique.

3. Ensemble de raccordement selon la revendication 1 ou 2, **caractérisé en ce que** la deuxième pièce de raccordement (14) est une pièce en matière plastique.

4. Ensemble de raccordement selon l'une des revendications précédentes, **caractérisé en ce que** la deuxième pièce de raccordement (14) présente un logement pour un outil de vissage au moyen duquel la deuxième pièce de raccordement (14) peut être tournée par rapport à la première pièce de raccordement (12).

5. Ensemble de raccordement selon l'une des revendications précédentes, **caractérisé en ce que** la structure de rampe est conçue de telle sorte que l'ensemble de raccordement (10) est apte à être amené depuis l'état de montage dans l'état de prémontage par une rotation d'un angle prédéterminé de la deuxième pièce de raccordement (14).

6. Ensemble de raccordement selon la revendication 5, **caractérisé en ce que** l'angle est de 120°.

7. Ensemble de raccordement selon l'une des revendications précédentes, **caractérisé en ce qu'**une pièce de raccordement (14) présente une extrémité conique (16a) qui peut être insérée dans un perçage (39 ; 39') de l'autre pièce de raccordement (12).

8. Ensemble de raccordement selon l'une des revendications précédentes, **caractérisé en ce que** dans l'état de prémontage, les deux pièces de raccordement (12, 14) sont maintenues ensemble de manière imperdable.

9. Ensemble de raccordement selon l'une des revendications précédentes, **caractérisé en ce que** dans l'état de prémontage, des tronçons d'enclenchement (54) de la première pièce de raccordement (12) coopèrent avec des creux d'enclenchement (26) de l'autre pièce de raccordement (14).

10. Ensemble de raccordement selon la revendication 9, **caractérisé en ce que** les tronçons d'enclenchement (54) et les creux d'enclenchement (26) imposent dans l'état de prémontage une position angulaire déterminée des deux pièces de raccordement (12, 14) l'une par rapport à l'autre, laquelle permet une insertion supplémentaire de la deuxième pièce de raccordement (14) dans la première pièce de raccordement (12).

11. Ensemble de raccordement selon l'une des revendications 1 à 8, **caractérisé en ce que** dans l'état de prémontage, des surfaces d'appui (70, 74) de l'une des pièces de raccordement (14) coopèrent avec le bord d'un perçage (39') de l'autre pièce de raccordement (12).

12. Ensemble de raccordement selon la revendication 11, **caractérisé en ce que** les surfaces d'appui (70, 74) et le bord du perçage (39') imposent dans l'état de prémontage une position angulaire déterminée des deux pièces de raccordement (12, 14) l'une par rapport à l'autre, laquelle permet une insertion supplémentaire de la deuxième pièce de raccordement (14) dans la première pièce de raccordement (12).

13. Ensemble de raccordement selon l'une des revendications précédentes, **caractérisé en ce que** dans l'état de montage, des tronçons d'enclenchement (54) de l'une des pièces de raccordement (12) coopèrent avec des surfaces d'enclenchement (34) de l'autre pièce de raccordement (14).

14. Ensemble de raccordement selon l'une des revendications précédentes, **caractérisé en ce que** les moyens de retenue présentent au moins un élément d'écartement (42) comportant un tronçon de retenue (44) qui, dans l'état de prémontage mais pas dans l'état de montage, peut être pivoté radialement vers l'intérieur pour permettre le passage de la première pièce de raccordement (12) à travers un orifice (64) de l'élément support (58).

15. Ensemble de raccordement selon la revendication 14, **caractérisé en ce que** l'élément d'écartement (42) présente un tronçon de serrage (50) qui, dans l'état de montage mais pas dans l'état de prémontage, repose sous précontrainte sur un tronçon (18) de la deuxième pièce de raccordement (14).
